# EUROPEAN PATENT APPLICATION

(11) **EP 4 246 908 A1**
(43) Date of publication of application: **20.09.2023**
(21) Application number: 21905458.2
(22) Date of filing: 23.11.2021
(51) Int. Cl.: H04L 41/00

(54) **COMMUNICATION SYSTEM, METHOD AND APPARATUS**

(30) Priority: 16.12.2020 CN 202011487834
(71) Applicant: Huawei Technologies Co., Ltd., Shenzhen, Guangdong 518129 (CN)
(72) Inventor: REN, Qiandong, Shenzhen, Guangdong 518129 (CN)
(74) Representative: Körber, Martin Hans
(86) International application number: PCT/CN2021/132354
(87) International publication number: WO 2022/127529

(57) **Abstract**

This application discloses a communication system, method, and apparatus, to resolve problems of a long communication delay and low reliability in the conventional technology. After obtaining a first IP address allocated by a network device, a first terminal device sends the first IP address and a first identifier of the first terminal device to a server. After receiving the first identifier and the first IP address from the first terminal device, the server determines, based on the first identifier, a second terminal device associated with the first terminal device, and sends the first IP address to the second terminal device. After receiving the first IP address, the second terminal device communicates with the first terminal device based on the first IP address. In this way, after the server sends the IP address of the first terminal device to the second terminal device, the second terminal device may directly communicate with the first terminal device by using the IP address, to avoid a long communication delay caused by an excessive quantity of communication network elements, and improve communication reliability.

## Description

### CROSS-REFERENCE TO RELATED APPLICATIONS

This application claims priority to Chinese Patent Application No. 202011487834.1, filed with the China National Intellectual Property Administration on December 16, 2020 and entitled "COMMUNICATION SYSTEM, METHOD, AND APPARATUS", which is incorporated herein by reference in its entirety.

### TECHNICAL FIELD

Embodiments of this application relate to the field of communication technologies, and in particular, to a communication system, method, and apparatus.

### BACKGROUND

Currently, both communication between a vehicle and a terminal device (for example, a mobile phone) and communication between a smart home device and a terminal device need to be forwarded by a server. Communication between a vehicle and a mobile phone is used as an example. The mobile phone sends, in response to a control instruction input by a user, the control instruction to the server. After receiving the control instruction from the mobile phone, the server sends the control instruction to the vehicle. Particularly, because the vehicle enters a sleep mode after an ignition switch is turned off, when the vehicle is in the sleep mode, after receiving the control instruction, the server further needs to be connected to a short message service gateway (short message service-service center, SMS-SC) or a voice gateway of an operator, and can send the control instruction to the vehicle only after waking up the vehicle through the SMC-SC or the voice gateway. However, when interaction is performed through the server, the SMS-SC, or the voice gateway, there are excessive network elements in a communication system, and a transmission path is excessively long. This causes problems such as a long communication delay and low reliability, and affects user experience.

### SUMMARY

Embodiments of this application provide a communication system, method, and apparatus, to resolve problems of a long transmission path and a long communication delay caused by a large quantity of communication network elements in a conventional technology.

According to a first aspect, an embodiment of this application provides a communication system. The communication system includes a server, a first terminal device, and a second terminal device. The first terminal device is configured to: obtain a first internet protocol (internet protocol, IP) address allocated by a network device to the first terminal device, and send the first IP address and a first identifier of the first terminal device to the server, where the first IP address is used to directly communicate with the second terminal device associated with the first terminal device. The server is configured to: receive the first identifier and the first IP address from the first terminal device; and notify the second terminal device of the first IP address based on the first identifier, where there is an association relationship between the first identifier and a second identifier of the second terminal device. The second terminal device is configured to: receive and store the first IP address from the server; and send first information to the first terminal device based on the first IP address. The first terminal device is further configured to receive the first information from the second terminal device.

According to the foregoing design, after obtaining the first IP address, the first terminal device may send, through the server, the first IP address to the second terminal device associated with the first terminal device. In this way, after obtaining the first IP address, the second terminal device may send the first information to the first terminal device based on the first IP address. This implements direct communication between the first terminal device and the second terminal device, avoids a transmission delay reduction caused by an excessive quantity of communication network elements, and improves communication reliability.

In a possible design, the first IP address is an internet protocol version 6 IPv6 address. According to the foregoing design, the IPv6 address is allocated to the first terminal device. Because the IPv6 address is a public network address, the second terminal device may directly perform addressing by using the IPv6 address of the first terminal device, to ensure direct communication between the first terminal device and the second terminal device, and improve efficiency of communication between the first terminal device and the second terminal device.

In a possible design, when obtaining the first IP address allocated by the network device to the first terminal device, the first terminal device is configured to: send a network registration request to the network device, where the network registration request carries an address type parameter, and the address type parameter is used to indicate the network device to allocate the IPv6 address to the first terminal device; and obtain a network registration response returned by the network device, where the network registration response carries the first IP address.

According to the foregoing design, the address type parameter carried in the network registration request is used to indicate the network device to allocate the IPv6 address to the first terminal device, so that the first terminal device can obtain the IPv6 address, to ensure that the first terminal device can directly communicate with the second terminal device by using the IPv6 address, and improve efficiency of communication between the first terminal device and the second terminal device.

In a possible design, the first terminal device is further configured to: in a process in which the first terminal device reattaches to a network, obtain a third IP address allocated by the network device to the first terminal device, where the third IP address is different from the first IP address; and notify the second terminal device of the third IP address. The second terminal device is further configured to: receive the third IP address from the first terminal device, and replace the stored first IP address with the third IP address.

According to the foregoing design, the first terminal device may obtain a new IP address in the process of reattaching to the network, and then notify the second terminal device of the new IP address, so that the second terminal device can communicate with the first terminal device by using the new IP address, to avoid that the second terminal device cannot address the first terminal device when the IP address changes. In addition, the first terminal device obtains the new IP address in the process of reattaching to the network, instead of actively detecting whether the IP address changes. This reduces power consumption of the first terminal device.

In a possible design, the first terminal device is further configured to: when determining that use duration of the first IP address reaches first duration, update the first IP address to a third IP address, where a host address of the third IP address is different from a host address of the first IP address, and a network address of the third IP address is the same as a network address of the first IP address; and notify the second terminal device of the third IP address. The second terminal device is further configured to: receive the third IP address, and replace the stored first IP address with the third IP address.

According to the foregoing design, the first terminal device may periodically update the IP address. During periodic update, a network address of a new IP address is the same as that of an old IP address. Therefore, the first terminal device may still communicate with a network side based on the new IP address. In addition, communication security and availability are ensured.

In a possible design, when notifying the second terminal device of the third IP address, the first terminal device is configured to send the third IP address to the server. The server is further configured to: receive the third IP address from the first terminal device, and send the third IP address to the second terminal device. The second terminal device is configured to receive the third IP address sent by the server.

According to the foregoing design, when the IP address of the first terminal device changes, the server may notify the second terminal device of the updated IP address, to ensure real-time communication between the first terminal device and the second terminal device, and improve communication reliability.

In a possible design, when notifying the second terminal device of the third IP address, the first terminal device is configured to send the third IP address to the second terminal device based on a second IP address. When receiving the third IP address, the second terminal device is configured to receive the third IP address sent by the first terminal device.

According to the foregoing design, when the IP address of the first terminal device changes, the updated IP address is directly sent to the second terminal device, to ensure real-time communication between the first terminal device and the second terminal device, and improve efficiency of communication.

In a possible design, the first terminal device is further configured to send a receiving response to the second terminal device after receiving the first information from the second terminal device. The second terminal device is further configured to: if no receiving response from the first terminal device is received within second duration, send an address query request to the server, where the address query request carries the first identifier. The server is further configured to: receive the address query request from the second terminal device; query, based on the address query request, a fourth IP address of the first terminal device identified by the first identifier; and send the fourth IP address to the second terminal device. The second terminal device is further configured to: receive the fourth IP address from the server, and send the first information to the first terminal device again based on the fourth IP address.

According to the foregoing design, when the second terminal device cannot establish a communication connection to the first terminal device, the second terminal device may obtain, through the server, the IP address, of the first terminal device, that is stored in the server, and communicate with the first terminal device based on the IP address, of the first terminal device, that is stored in the server, to ensure efficiency of communication.

In a possible design, the first terminal device is associated with N second terminal devices; and when notifying the second terminal device of the first IP address based on the first identifier, the server is configured to: determine, based on a first mapping relationship, the N second terminal devices associated with the first terminal device, where the first mapping relationship includes an association relationship between the first identifier and N second identifiers, and the N second identifiers are respectively used to identify the N second terminal devices; and notify the N second terminal devices of the first IP address.

According to the foregoing design, the server sends the first IP address of the first terminal device to the N second terminal devices associated with the first terminal device. For example, a value of N is a positive integer. When the value of N is 1, the first terminal device is associated with one second terminal device. When the value of N is greater than or equal to 2, the first terminal device is associated with a plurality of second terminal devices. In this way, all the second terminal devices associated with the first terminal device can perform real-time communication with the first terminal device. This improves communication reliability.

In a possible design, the first terminal device is associated with N second terminal devices; and when sending the first IP address and the first identifier of the first terminal device to the server, the first terminal device is configured to send the first IP address, the first identifier of the first terminal device, and a first service type of the first terminal device to the server. The server is further configured to receive the first service type from the first terminal device. When notifying the second terminal device of the first IP address based on the first identifier, the server is configured to: determine, based on a first mapping relationship, the N second terminal devices associated with the first terminal device, where the first mapping relationship includes an association relationship between the first identifier and N second identifiers, and the N second identifiers are respectively used to identify the N second terminal devices; screen at least one second terminal device from the N second terminal devices based on a second mapping relationship, where the second mapping relationship includes an association relationship between a second identifier of the at least one second terminal device and a second service type of the at least one second terminal device, and the second service type of the at least one second terminal device is the same as the first service type; and notify the at least one second terminal device of the first IP address.

According to the foregoing design, the server sends the first IP address of the first terminal device to the second terminal device that is associated with the first terminal device and whose service type is the same as that of the first terminal device. For example, the first terminal device is a mobile phone. The second terminal device associated with the mobile phone includes a smart air conditioner and a smart speaker. The server may determine, based on a service type of the mobile phone, to send an IP address of the mobile phone to the smart air conditioner or the smart speaker, to improve communication reliability and efficiency of communication.

In a possible design, the first terminal device is associated with N second terminal devices; and when sending the first IP address and the first identifier of the first terminal device to the server, the first terminal device is configured to send the first IP address, the first identifier of the first terminal device, and a second identifier of at least one second terminal device to the server. The server is further configured to receive the second identifier of the at least one second terminal device from the first terminal device. When notifying the second terminal device of the first IP address based on the first identifier, the server is configured to notify the at least one second terminal device of the first IP address based on the first identifier, where there is an association relationship between the first identifier and the second identifier of the at least one second terminal device.

According to the foregoing design, the server directly sends the first IP address to the at least one second terminal device indicated by the first terminal device, so that calculation complexity of the server is reduced, and IP address transmission efficiency is improved.

According to a second aspect, an embodiment of this application provides a communication method. The method may be applied to a first terminal device or a chip or a chip system in the first terminal device. For example, the method is applied to the first terminal device. The method includes: obtaining a first IP address allocated by a network device to the first terminal device, where the first IP address is used to directly communicate with a second terminal device associated with the first terminal device; sending the first IP address and a first identifier of the first terminal device to a server, so that the server sends the first IP address to the second terminal device, where there is an association relationship between the first identifier and a second identifier of the second terminal device; and receiving first information from the second terminal device, where the first information carries the first IP address, and the first IP address is used as a destination IP address.

According to the foregoing design, after obtaining the IP address of the second terminal device, the first terminal device may directly communicate with the second terminal device in real time based on the IP address, without performing information forwarding through another network element (for example, the server), to improve efficiency of communication between the first terminal device and the second terminal device, and reduce a communication delay.

In a possible design, the first IP address is an IPv6 address. According to the foregoing design, because the IPv6 address is a public network address, remote communication between the first terminal device and the second terminal device can be implemented by using the IPv6 address. This avoids that network elements cannot communicate with each other due to a change of a temporary public network address, and improves communication reliability.

In a possible design, the obtaining a first IP address allocated by a network device to the first terminal device includes: sending a network registration request to the network device, where the network registration request carries an address type parameter, and the address type parameter is used to indicate the network device to allocate the IPv6 address to the first terminal device; and obtaining a network registration response returned by the network device, where the network registration response carries the first IP address.

According to the foregoing design, the first terminal device may send the address type parameter to the network device in a network registration process, to indicate the network device to allocate the IPv6 address. This improves efficiency of communication.

In a possible design, the method further includes: in a process in which the first terminal device reattaches to a network, obtaining a third IP address allocated by the network device to the first terminal device, where the third IP address is different from the first IP address; and notifying the second terminal device of the third IP address, where the third IP address is used to indicate the second terminal device to replace the stored first IP address of the first terminal device with the third IP address.

According to the foregoing design, the first terminal device may obtain, in the reattaching process, a new IP address allocated by a network side. Compared with a case in which the first terminal device actively detects whether the IP address changes, power consumption of the terminal device can be reduced.

In a possible design, the method further includes: when determining that use duration of the first IP address reaches preset duration, updating the first IP address to a third IP address, where a host address of the third IP address is different from a host address of the first IP address, and a network address of the third IP address is the same as a network address of the first IP address; and notifying the second terminal device of the third IP address, where the third IP address is used to indicate the second terminal device to replace the stored first IP address of the first terminal device with the third IP address. According to the foregoing design, the first terminal device actively updates the IP address, to improve communication security and reliability.

In a possible design, the server notifies the second terminal device of the third IP address; or directly sends the third IP address to the second terminal device based on a stored second IP address of the second terminal device.

According to the foregoing design, the first terminal device sends a new IP address to the second terminal device through the server, to improve address update accuracy. The first device directly sends the IP address to the second terminal device, to improve address update efficiency.

According to the foregoing design, the first terminal device is associated with N second terminal devices, and the sending the first IP address and a first identifier of the first terminal device to a server includes: directly sending the first IP address and the first identifier of the first terminal device to the server; sending the first IP address, the first identifier, and a first service type of the first terminal device to the server; or sending the first IP address, the first identifier, and a second identifier of at least one second terminal device to the server.

According to a third aspect, an embodiment of this application provides a communication method, applied to a server. The method includes: receiving a first identifier of a first terminal device and a first IP address of the first terminal device from the first terminal device, where the first IP address is used to directly communicate with a second terminal device associated with the first terminal device; and notifying the second terminal device of the first IP address based on the first identifier, where there is an association relationship between the first identifier and a second identifier of the second terminal device.

According to the foregoing design, after receiving the first identifier and the first IP address of the first terminal device that are sent by the first terminal device, if there is the association relationship between the first identifier of the first terminal device and the second identifier of the second terminal device, the server determines, based on the first identifier and the second identifier, that the first terminal device is associated with the second terminal device, and sends the IP address of the first terminal device to the second terminal device, so that the second terminal device can directly communicate with the first terminal device by using the first IP address. This improves efficiency of communication.

In a possible design, the first terminal device is associated with N second terminal devices, and the notifying the second terminal device of the first IP address based on the first identifier includes: determining, based on a first mapping relationship, the N second terminal devices associated with the first terminal device, where the first mapping relationship includes an association relationship between the first identifier and N second identifiers, and the N second identifiers are respectively used to identify the N second terminal devices; and notifying the N second terminal devices of the first IP address.

According to the foregoing design, the server sends the first IP address of the first terminal device to the N second terminal devices associated with the first terminal device, and all the N second terminal devices can perform real-time communication with the first terminal device. This improves communication reliability.

In a possible design, the first terminal device is associated with N second terminal devices; and when receiving the first identifier of the first terminal device and the first IP address of the first terminal device from the first terminal device, the server further receives a first service type of the first terminal device from the first terminal device; and the notifying the second terminal device of the first IP address based on the first identifier includes: determining, based on a first mapping relationship, the N second terminal devices associated with the first terminal device, where the first mapping relationship includes an association relationship between the first identifier and N second identifiers, and the N second identifiers are respectively used to identify the N second terminal devices; screening at least one second terminal device from the N second terminal devices based on a second mapping relationship, where the second mapping relationship includes an association relationship between a second identifier of the at least one second terminal device and a second service type of the at least one second terminal device, and the second service type of the at least one second terminal device is the same as the first service type; and notifying the at least one second terminal device of the first IP address.

According to the foregoing design, the server sends the first IP address of the first terminal device to the second terminal device that is associated with the first terminal device and whose service type is the same as that of the first terminal device. This improves communication reliability and efficiency of communication.

In a possible design, the first terminal device is associated with N second terminal devices; when receiving the first identifier of the first terminal device and the first IP address of the first terminal device from the first terminal device, the server further receives a second identifier of at least one second terminal device from the first terminal device; and the notifying the second terminal device of the first IP address based on the first identifier includes: notifying the at least one second terminal device of the first IP address based on the first identifier, where there is an association relationship between the first identifier and the second identifier of the at least one second terminal device.

According to the foregoing design, the server directly sends the first IP address to the at least one second terminal device indicated by the first terminal device, so that calculation complexity of the server is reduced, and IP address transmission efficiency is improved.

According to a fourth aspect, an embodiment of this application provides a communication method. The method may be performed by a second terminal device or a chip or a chip system in the second terminal device, to implement the method performed by the second terminal device according to any possible implementation in the first aspect.

According to a fifth aspect, this application provides a communication apparatus. The apparatus includes modules/units that perform the method according to any possible implementation in the second aspect, the third aspect, or the fourth aspect. These modules/units may be implemented by hardware, or may be implemented by hardware by executing corresponding software.

According to a sixth aspect, this application provides a communication apparatus. The communication apparatus includes a processor and a memory. The memory is configured to store one or more computer programs. When the one or more computer programs stored in the memory are executed by the processor, the communication apparatus is enabled to implement the method according to any possible implementation in the second aspect, the third aspect, or the fourth aspect.

According to a seventh aspect, this application provides a computer program. When the computer program is run on a computer, the computer is enabled to perform the method according to any possible implementation in the second aspect, the third aspect, or the fourth aspect.

According to an eighth aspect, this application provides a computer-readable storage medium. The computer-readable storage medium stores a computer program. When the computer program is executed by a computer, the computer is enabled to perform the method according to any possible implementation in the second aspect, the third aspect, or the fourth aspect.

According to a ninth aspect, this application provides a chip. The chip is configured to read a computer program stored in a memory, to perform the method according to any possible implementation in the second aspect, the third aspect, or the fourth aspect.

According to a tenth aspect, an embodiment of this application further provides a chip system. The chip system includes a processor, configured to support a computer apparatus in implementing the method according to any possible implementation in the second aspect, the third aspect, or the fourth aspect. In a possible design, the chip system further includes a memory. The memory is configured to store a program and data that are used for the computer apparatus. The chip system may include a chip, or may include a chip and another discrete device.

For technical effects that can be achieved by any one possible technical solution in the fourth aspect to the tenth aspect, refer to descriptions of technical effects that can be achieved by the method in any possible implementation in the first aspect, the second aspect, or the third aspect. Details are not described herein again.

### BRIEF DESCRIPTION OF DRAWINGS

FIG. 1 is a schematic diagram of a possible communication system according to an embodiment of this application;
FIG. 2 is a schematic diagram of a structure of a possible terminal device according to an embodiment of this application;
FIG. 3 is a schematic flowchart of a possible communication method according to an embodiment of this application;
FIG. 4 is a schematic flowchart of another possible communication method according to an embodiment of this application;
FIG. 5 is a schematic flowchart of still another possible communication method according to an embodiment of this application;
FIG. 6 is a schematic diagram of a structure of a possible communication apparatus according to an embodiment of this application; and
FIG. 7 is a schematic diagram of a structure of another possible communication apparatus according to an embodiment of this application.

### DESCRIPTION OF EMBODIMENTS

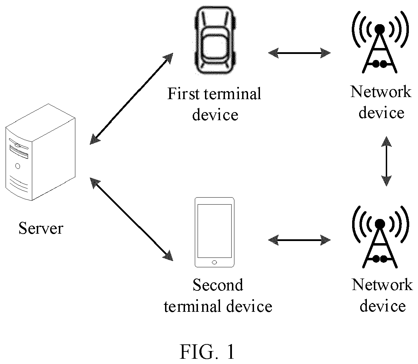

FIG. 1 shows a possible communication system according to an embodiment of this application. The communication system may include a server, a first terminal device, a second terminal device, and a network device. Embodiments of this application may use a 4th generation mobile communication technology (4th Generation mobile communication technology, 4G) network architecture, for example, a long term evolution (long term evolution, LTE) system, or may use a 5th generation mobile communication technology (5th Generation mobile communication technology, 5G) network architecture, for example, an NR system, a future 6th generation mobile communication technology network architecture, or another similar communication system. This is not specifically limited.

The network device may also be referred to as an access network (access network, AN) device, for example, a base station, and may be a device that communicates with a vehicle-mounted terminal and a terminal device through an air interface in an access network through one or more cells. The base station may be configured to perform mutual conversion between a received over-the-air frame and an IP packet, and serve as a router between the terminal device, the vehicle-mounted terminal, and a remaining part of the access network. The remaining part of the access network may include an IP network. The network device may also coordinate attribute management of the air interface. For example, the network device may include an evolved NodeB (evolved NodeB, NodeB, eNB, or e-NodeB) in an LTE system or a long term evolution-advanced (long term evolution-advanced, LTE-A) system, or may include a next generation NodeB (next generation NodeB, gNB) in a 5G NR system (also referred to as an NR system for short). This is not limited in embodiments of this application.

For example, the first terminal device may be a vehicle-mounted terminal, a smart home device, or a wireless terminal, and the second terminal device may also be a vehicle-mounted terminal, a smart home device, or a wireless terminal.

The vehicle-mounted terminal may be considered as a device placed or installed on a vehicle, and includes a communication module, configured to provide a cellular communication function, to support an external communication connection of the vehicle. For example, the vehicle may communicate with the terminal device through the vehicle-mounted terminal and the network device (such as the base station) in a communication network. For another example, the vehicle may alternatively communicate with a server through the vehicle-mounted terminal and a communication network.

The smart home device may be but is not limited to a device such as a smart air conditioner, a smart washing machine, a smart refrigerator, a smart water heater, a smart rice cooker, or a smart lamp.

The wireless terminal may be a device that provides a user with voice and/or data connectivity, a handheld device having a wireless connection function, or another processing device connected to a wireless modem. The wireless terminal may be a mobile terminal, for example, a mobile phone (or also referred to as a "cellular" phone), and a computer having a mobile terminal. For example, the wireless terminal may be a portable, pocket-sized, handheld, or computer-built-in mobile apparatus, which exchanges languages and/or data with a radio access network. For example, the wireless terminal may be a mobile phone, a wearable device (such as a smart watch), a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a smart interactive speaker, or a smart interactive screen. The wireless terminal may also be referred to as a subscriber unit (subscriber unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), or user equipment (user equipment).

In the following, only an example in which the first terminal device is a vehicle-mounted terminal and the second terminal device is a wireless terminal (where the wireless terminal is referred to as a terminal device below) is used for description.

The terminal device may include an application program used to provide a function of interaction between a user and a vehicle. Example 1: When an outdoor temperature is high, the user may remotely control, through an application program, the vehicle to turn on an air conditioner for precooling. Example 2: When an outdoor temperature is low, the user may remotely control, through an application program, the vehicle to turn on an air conditioner for preheating. Example 3: After the vehicle stops running for a period of time, if the vehicle detects that a vehicle window is not closed, the vehicle may notify the user through an application program that the vehicle window is closed abnormally, and then the user may remotely control, through the application program, the vehicle window to be closed. Example 4: After the vehicle stops running for a period of time, if the vehicle detects abnormal vibration or collision, the user may be notified of vehicle abnormality through an application program. Example 5: The user may remotely check battery usage of the vehicle, component information of the vehicle, and the like in real time through an application program.

The server is configured to manage IP addresses of the terminal device and the vehicle-mounted terminal. A specific deployment form of the server is not limited in this application. Specifically, the server may be deployed on a cloud, or may be an independent computer device, a chip, or the like.

For example, both the vehicle-mounted terminal and the terminal device may obtain the IP address allocated by the network side. After the user stops and leaves the vehicle, the terminal device may use the IP address of the vehicle-mounted terminal as a target IP address when detecting a control instruction input by the user in the application program, and use the IP address of the terminal device as a source IP address to send the control instruction to the vehicle-mounted terminal. In this way, when receiving the control instruction from the terminal device, the vehicle-mounted terminal may perform an operation indicated by the control instruction.

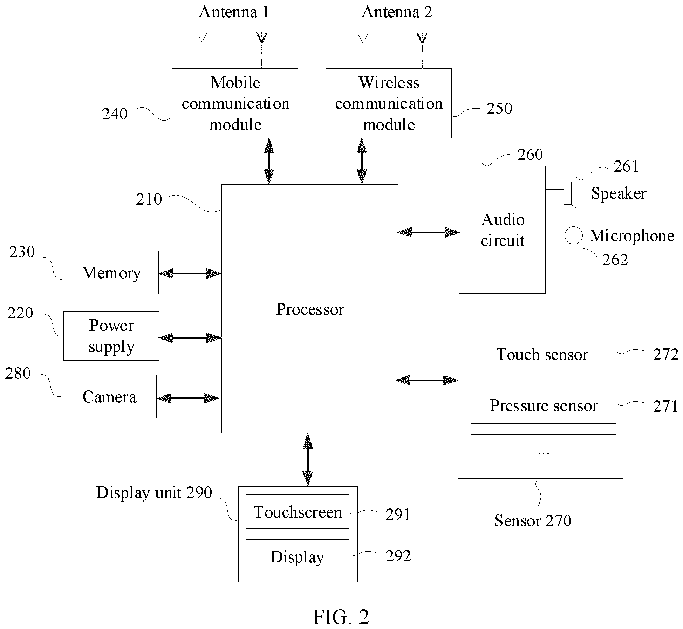

FIG. 2 is a schematic diagram of an optional hardware structure of a terminal device.

The terminal device may include: a processor 210, a power supply 220, a memory 230, an antenna 1, an antenna 2, a mobile communication module 240, a wireless communication module 250, an audio circuit 260, a speaker 261, a microphone 262, a sensor 270, a camera 280, a display unit 290, and the like. The sensor 270 may include a touch sensor 272, a pressure sensor 271, and the like.

It may be understood that the structure illustrated in embodiments of this application does not constitute a specific limitation on the terminal device. In some other embodiments of this application, the terminal device may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), or a baseband processor. Different processing units may be independent devices, or may be integrated into one or more processors.

A memory may be further disposed in the processor 210, and is configured to store instructions and data. In some embodiments, the memory in the processor 210 is a cache. The memory may store instructions or data that has been used or cyclically used by the processor 210. If the processor 210 needs to use the instructions or the data again, the processor 210 may directly invoke the instructions or the data from the memory. This avoids repeated access and reduces waiting time of the processor 210, so that system efficiency is improved.

The terminal device further includes the power supply 220 (such as a battery) configured to supply power to the components. Optionally, the power supply 220 may be logically connected to the processor 210 through a power management system, to implement functions such as charge management, discharge management, and power consumption management through the power management system.

The memory 230 may be configured to store computer-executable program code, and the executable program code includes instructions. The memory 230 may include a program storage area and a data storage area. The program storage area may store an operating system, an application program for at least one function (for example, an application program used to implement interaction between a vehicle and a user), and the like. The data storage area may store data (for example, a control instruction input by a user) created when the terminal device is used, and the like. In addition, the memory 230 may include a high-speed random access memory, and may further include a non-volatile memory, for example, at least one magnetic disk storage device, a flash memory device, or a universal flash storage (universal flash storage, UFS). The processor 210 runs instructions stored in the memory 230 and/or instructions stored in the memory disposed in the processor, to perform various function applications of the terminal device and data processing.

A wireless communication function of the terminal device may be implemented through the antenna 1, the antenna 2, the mobile communication module 240, the wireless communication module 250, the modem processor, the baseband processor, and the like.

The antenna 1 and the antenna 2 are configured to transmit and receive an electromagnetic wave signal. Each antenna in the terminal device may be configured to cover one or more communication frequency bands. Different antennas may be multiplexed to improve antenna utilization. For example, the antenna 1 may be multiplexed as a diversity antenna in a wireless local area network. In some other embodiments, the antennas may be used in combination with a tuning switch.

The mobile communication module 240 may provide a solution, applied to the terminal device, to wireless communication including 2G, 3G, 4G, 5G, and the like. The mobile communication module 240 may include at least one filter, a switch, a power amplifier, a low noise amplifier (low noise amplifier, LNA), and the like. The mobile communication module 240 may receive an electromagnetic wave through the antenna 1, perform processing such as filtering or amplification on the received electromagnetic wave, and transmit the electromagnetic wave to the modem processor for demodulation. The mobile communication module 240 may further amplify a signal modulated by the modem processor, and convert the signal into an electromagnetic wave through the antenna 1 for radiation. In some embodiments, at least some functional modules in the mobile communication module 240 may be disposed in the processor 210. In some embodiments, at least some functional modules of the mobile communication module 240 may be disposed in a same device with at least some modules of the processor 210.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (not limited to the speaker 261), or displays an image or a video through the display unit 290. In some embodiments, the modem processor may be an independent device. In some other embodiments, the modem processor may be independent of the processor 210, and is disposed in a same device as the mobile communication module 240 or another functional module.

The wireless communication module 250 may provide a solution, applied to the terminal device, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 250 may be one or more devices integrating at least one communication processor module. The wireless communication module 250 receives an electromagnetic wave through the antenna 2, performs frequency modulation and filtering processing on an electromagnetic wave signal, and sends the processed signal to the processor 210. The wireless communication module 250 may further receive a to-be-sent signal from the processor 210, perform frequency modulation and amplification on the to-be-sent signal, and convert, through the antenna 2, the signal into an electromagnetic wave for radiation.

In some embodiments, the antenna 1 of the terminal device is coupled to the mobile communication module 240, and the antenna 2 is coupled to the wireless communication module 250, so that the terminal device may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), LTE, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device may implement an audio function through the audio circuit 260, the speaker 261, the microphone 262, the application processor, and the like. For example, the audio function may be music playback, voice call, and voice control.

The audio circuit 260 is configured to convert digital audio information into an analog audio signal for output, and is also configured to convert analog audio input into a digital audio signal. The audio circuit 260 may be configured to code and decode an audio signal. In some embodiments, the audio circuit 260 may be disposed in the processor 210, or some functional modules in the audio circuit 260 are disposed in the processor 210.

The speaker 261, also referred to as a "horn", is configured to convert an audio electrical signal into a sound signal. The terminal device may be used to listen to music or a voice prompt through the speaker 261. For example, the terminal device may prompt, through the speaker 261, the user that the vehicle vibrates or collides abnormally.

The microphone 262, also referred to as a "mike" or a "mic", is configured to convert a sound signal into an electrical signal. When voice information is sent or a voice instruction occurs, the user may make a sound by moving a human mouth close to the microphone 262, to input a sound signal into the microphone 262.

The pressure sensor 271 is configured to sense a pressure signal, and may convert the pressure signal into an electrical signal. In some embodiments, the pressure sensor 271 may be disposed on the display 292. There are a plurality of types of pressure sensors 271, for example, a resistive pressure sensor, an inductive pressure sensor, and a capacitive pressure sensor. The capacitive pressure sensor may include at least two parallel plates made of conductive materials. When a force is applied to the pressure sensor 271, capacitance between electrodes changes. The terminal device determines pressure strength based on a capacitance change. When a touch operation is performed on the display 292, the terminal device detects intensity of the touch operation through the pressure sensor 271. The terminal device may further calculate a touch location based on a detection signal of the pressure sensor 271. In some embodiments, touch operations that are performed in a same touch location but have different touch operation intensity may correspond to different operation instructions. For example, when a touch operation whose touch operation strength is less than a first pressure threshold acts on an icon of an application A (namely, an application program used to provide an interaction function between the user and the vehicle), instructions for starting the application A are executed.

The touch sensor 272 is also referred to as a "touch component". The touch sensor 272 may be disposed on the display 292, and the touch sensor 272 and the display 292 constitute a touchscreen, which is also referred to as a "touch screen". The touch sensor 272 is configured to detect a touch operation on or near the touch sensor 272. The touch sensor may transfer the detected touch operation to the application processor to determine a type of a touch event. Visual output related to the touch operation may be provided through the display 292. In some other embodiments, the touch sensor 272 may alternatively be disposed on a surface of the terminal device at a location different from a location of the display 292.

The display unit 290 may be configured to: receive input digit or character information, and generate a signal input related to a user setting and function control of the terminal device. Specifically, the display unit 290 may include the touchscreen 291, and may collect a touch operation of the user on or near the touchscreen 291, for example, clicking a button or dragging a scroll box. In some embodiments, the touchscreen 291 may receive a control instruction input by the user.

The display unit 290 may be further configured to display information input by the user or information provided for the user, and various menus of the terminal device. Specifically, the display unit 290 may include the display 292, and the display 292 is configured to present an interface, to implement human-computer interaction. The display 292 may be configured in a form of a liquid crystal display, a light-emitting diode, or the like. In some examples, the display 292 may be used to display a navigation route.

The touchscreen 291 may cover the display 292, or the touchscreen 291 and the display 292 may be integrated to implement input and output functions of the terminal device. After being integrated, the touchscreen 291 and the display 292 may be referred to as a touch display.

The technical solutions provided in embodiments of this application are described below with reference to the accompanying drawings.

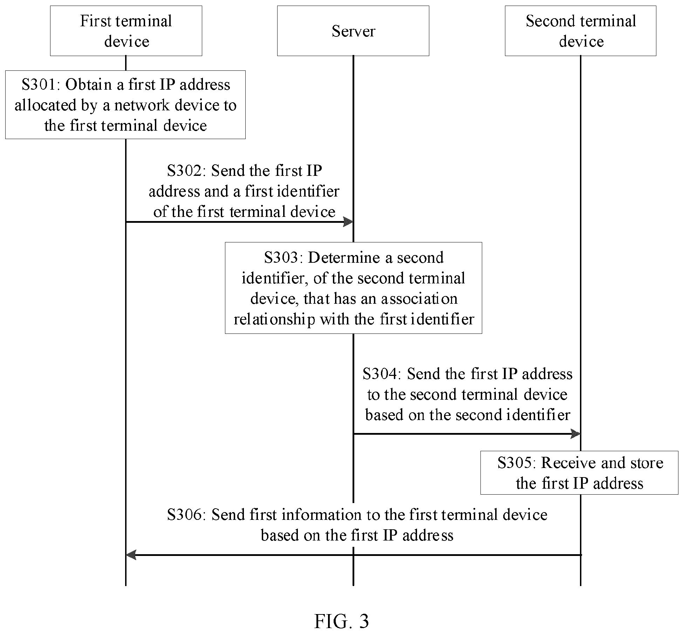

FIG. 3 shows a possible communication method according to an embodiment of this application. For example, the method is applied to the communication system shown in FIG. 1. S301 and S302 may be performed by a first terminal device, or may be performed by a chip or a chip system in the first terminal device. S305 may be performed by a second terminal device, or may be performed by a chip or a chip system in the second terminal device.

S301: The first terminal device obtains a first IP address allocated by a network device to the first terminal device.

In a current communication network, when the first terminal device and the second terminal device need to use a network service, the first terminal device and the second terminal device first need to register with a network. Network registration may also be referred to as attachment. Only the first terminal device is used as an example. A registration procedure may include but is not limited to the following several scenarios: registering with the network for the first time, performing mobility registration update when the first terminal device moves out of an original registration area, performing periodic registration update, powering off and then powering on again, switching from turning on an airplane mode to turning off the airplane mode, moving from an area without network coverage to an area with network coverage, and the like.

The first terminal device may send a network registration request to a network side when registering with the network for the first time. After receiving the network registration request from the first terminal device, the network side allocates an IP address to the first terminal device, and sends, to the first device, a network registration response that carries the IP address of a vehicle-mounted terminal. After receiving the network registration response from the network side, the vehicle-mounted terminal may obtain, from the registration response, the IP address allocated by the network side to the first terminal device.

For example, the network side includes a base station and a 5G core network. After being powered on, the first terminal device sends the network registration request (Registration Request) to the base station, where the Registration Request carries an identifier of the first terminal device. After receiving the Registration Request from the first terminal device, the base station sends a first identifier of the first terminal device to the core network. The first identifier of the first terminal device may use an international mobile subscriber identity (international mobile subscriber identity, IMSI), an international mobile equipment identity (international mobile equipment identity, IMEI), a mobile equipment identifier (mobile equipment identifier, MEID), or the like. After performing certification and authentication with the first terminal device, the 5G core network sends a network registration response (Registration Accept) to the first terminal device, where the Registration Accept carries the IP address allocated by the 5G core network to the first terminal device.

Further, the network registration request may carry an IPv6 address type parameter, where the IPv6 address type parameter is used to indicate the network side to allocate an IPv6 address to the first terminal device. For example, a 4G communication system is used as an example. The first terminal device sends the network registration request (Attach Request) to the network side, where the Attach Request may carry the IPv6 address type parameter. For another example, a 5G communication system is used as an example. The first terminal device sends the network registration request (Registration Request) to the network side, where the Registration Request carries the IPv6 address type parameter.

Establishment of one or more PDU sessions may be triggered in a network registration process. For example, in a mobility registration update scenario, the first terminal device needs to send uplink data. In this case, the PDU session is created in the registration procedure. Therefore, a request message for requesting to create the PDU may further carry the IPv6 address type parameter. For example, the 5G communication system is still used as an example. When sending the network registration request (PDU Session Establishment Request) to the network side, the first terminal device may further include the IPv6 address type parameter in the PDU Session Establishment Request.

S302: The first terminal device sends the first IP address and the first identifier of the first terminal device to a server.

In an example, after obtaining the IP address allocated by the network side to the vehicle-mounted terminal, the first terminal device may send the first IP address and the first identifier to the server in a process of establishing an association relationship with the second terminal device.

In another example, the first terminal device may send the first IP address and the first identifier to the server after establishing an association with the second terminal device.

For example, the first terminal device and the second terminal device may establish the association in the following two possible manners:

For example, the first terminal device is a mobile phone, and the second terminal device is a vehicle-mounted terminal. The mobile phone sends a binding request to the server, where the binding request carries vehicle information, user information, and an identifier of the mobile phone. The user information includes one or more of a mobile phone number, an email address, or a user name, the vehicle information includes a vehicle identifier, and the vehicle identifier includes one or more of a license plate number, a vehicle identification number (vehicle identification number, VIN), driving license information, or the like. After receiving the binding request from the mobile phone, the server stores the vehicle information and the user information carried in the binding request.

The server stores an association relationship between an identifier of the vehicle-mounted terminal and the vehicle information. The server sends, based on the received vehicle information, a verification request to the vehicle-mounted terminal corresponding to the vehicle information, where the verification request carries the vehicle information. After receiving the verification request from the server, the vehicle-mounted terminal sends a verification response to the server when determining that the vehicle information sent by the server is the same as locally stored vehicle information, where the verification response represents that the vehicle-mounted terminal confirms to be associated with the mobile phone. After receiving the foregoing verification response from the vehicle-mounted terminal, the server may send a binding response to the mobile phone, to notify the mobile phone that the association has been established with the vehicle-mounted terminal. Further, the verification response may carry the identifier of the vehicle-mounted terminal. After receiving the verification response from the vehicle-mounted terminal, the server may send, to the mobile phone, the binding response that carries the identifier of the vehicle-mounted terminal, to facilitate subsequent direct communication performed between the vehicle-mounted terminal and the mobile phone.

When the first terminal device sends the first IP address and the first identifier of the first terminal device to the server, there are but are not limited to the following possible implementations:

In a first possible implementation, the first terminal device may directly send the first IP address and the first identifier to the server.

In a second possible implementation, the first terminal device sends the first IP address, the first identifier, and a first service type of the first terminal device to the server.

In a third possible implementation, the first terminal device sends the first IP address, the first identifier, and a second identifier of at least one second terminal device to the server. The at least one second terminal device is at least one terminal device in N second terminal devices associated with the first terminal device. N is a positive integer.

In a fourth possible implementation, the first terminal device sends indication information to the server, where the indication information carries the first IP address and the first identifier. The indication information is used to trigger the server to return, to the first terminal device, a second IP address of the second terminal device associated with the first terminal device.

S303: The server determines a second identifier, of the second terminal device, that has an association relationship with the first identifier

In a first possible case, the server receives only the first identifier and the first IP address from the first terminal device. For example, the server determines, based on a first mapping relationship, the N second terminal devices associated with the first terminal device, where the first mapping relationship includes an association relationship between the first identifier and N second identifiers, and the N second identifiers are respectively used to identify the N second terminal devices. Further, the server determines to send the IP address of the first terminal device to the N second terminal devices.

The first mapping relationship may be established and stored by the server based on the first identifier of the first terminal device and the second identifier of the second terminal device after the server receives the first identifier from the first terminal device and receives the second identifier of the second terminal device in the process of establishing the association between the first terminal device and the second terminal device.

In a second possible case, the server receives the first identifier, the first IP address, and the first service type from the first terminal device. For example, the server determines, based on a first mapping relationship, the N second terminal devices associated with the first terminal device; and selects the at least one second terminal device from the N second terminal devices based on a second mapping relationship, where the second mapping relationship includes an association relationship between the second identifier of the at least one second terminal device and a second service type of the at least one second terminal device, and the second service type of the at least one second terminal device is the same as the first service type. The second mapping relationship may be created and stored by the server in the process of establishing the association between the first terminal device and the second terminal device.

In a third possible case, the server receives the first identifier and the first IP address from the first terminal device and the second identifier of the at least one second terminal device. For example, the server determines, based on the first identifier, to notify the at least one second terminal device of the first IP address, where the first identifier is associated with the second identifier of the at least one second terminal device.

In a fourth possible case, the server receives the indication information from the first terminal device, where the indication information carries the first IP address and the first identifier The server determines, based on a first mapping relationship, the N second terminal devices associated with the first terminal device, and determines to send the IP address of the first terminal device to the N second terminal devices. Further, the server may determine, based on the indication information, to send the stored second IP addresses of the N second terminal devices to the first terminal device.

S304: The server sends the first IP address to the second terminal device based on the second identifier.

S305: The second terminal device receives and stores the first IP address from the server

S306: The second terminal device sends first information to the first terminal device based on the first IP address.

Correspondingly, the first terminal device receives the first information from the second terminal device.

In a process in which the first terminal device directly communicates with the second terminal device, both the first IP address of the first terminal device and the second IP address of the second terminal device may change. The following uses only the first terminal device as an example for description.

In a possible implementation, the first terminal device may reattach to the network in a case of restarting, turning off the airplane mode, moving from the area without network coverage to the area with network coverage, or the like. The first terminal device obtains, in a process in which the first terminal device reattaches to the network, a third IP address allocated by the network device to the first terminal device, where the third IP address is different from the first IP address.

In another possible implementation, when determining that use duration of the first IP address reaches first duration, the first terminal device replaces the first IP address with a third IP address, where a host address of the third IP address is different from a host address of the first IP address, and the host address of the third IP address is the same as a network address of the first IP address. The IP address may include the network address and the host address, where the network address is used to identify the network in which the terminal device is located, and the host address is used to identify the terminal device in the network.

For example, after the first terminal device obtains the third IP address, the first terminal device may notify the second terminal device of the third IP address through the server. Correspondingly, the second terminal device receives the first IP address through the server

In another example, the first terminal device may alternatively directly send the third IP address to the second terminal device based on the stored second IP address of the second terminal device. Correspondingly, the second terminal device directly receives the first IP address from the first terminal device.

For example, a first terminal device is a vehicle-mounted terminal, and a second terminal device is a mobile phone.

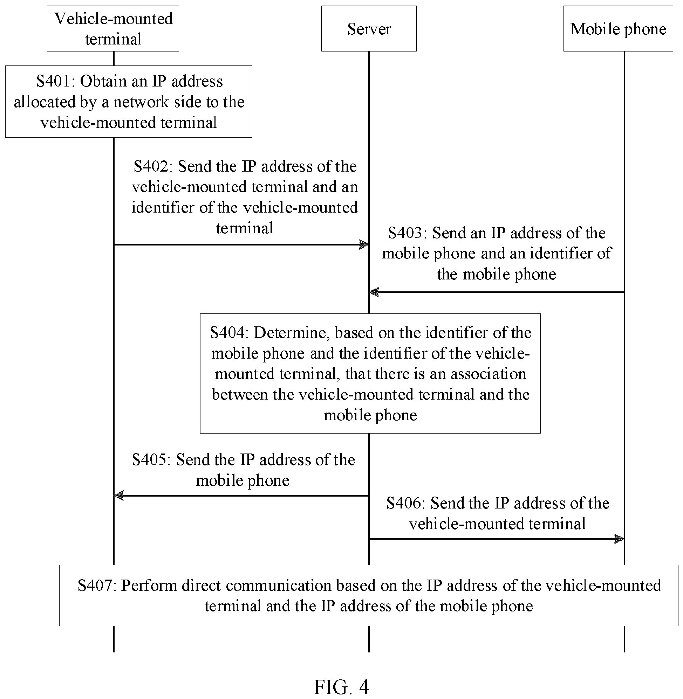

FIG. 4 is a schematic flowchart of possible communication according to an embodiment of this application.

S401: The vehicle-mounted terminal obtains an IP address, of the vehicle-mounted terminal, that is allocated by a network device to the vehicle-mounted terminal. Refer to S301.

S402: The vehicle-mounted terminal sends the IP address of the vehicle-mounted terminal and an identifier of the vehicle-mounted terminal to a server.

The vehicle-mounted terminal may send the IP address of the vehicle-mounted terminal and the identifier of the vehicle-mounted terminal to the server in a manner the same as that in S302.

For example, the vehicle-mounted terminal and the mobile phone may establish an association in the manner of establishing the association between the first terminal device and the second terminal device in S302. The vehicle-mounted terminal and the mobile phone may alternatively establish the association in the following manner: If the vehicle-mounted terminal is configured with an interaction apparatus for interacting with a user, the vehicle-mounted terminal may also initiate the association with the mobile phone to the server. For example, the vehicle-mounted terminal sends a binding request to the server, where the binding request carries vehicle information, the identifier of the vehicle-mounted terminal, and user information. The user information and the vehicle information may be input by the user into the vehicle-mounted terminal through the interaction apparatus. After receiving the binding request from the vehicle-mounted terminal, the server stores the vehicle information and user information carried in the binding request.

The server sends a verification request to the mobile phone based on the received user information, where the verification request carries the vehicle information. After receiving the verification request from the server, the mobile phone prompts the user whether to bind the mobile phone to the vehicle-mounted terminal corresponding to the vehicle information. In response to an acknowledgment binding indication selected by the user, the mobile phone sends a verification response to the server, where the verification response represents that the mobile phone confirms to establish the association relationship with the vehicle-mounted terminal. After receiving the verification response from the mobile phone, the server may send a binding response to the vehicle-mounted terminal, to notify the vehicle-mounted terminal that vehicle registration is completed. Further, the verification response may carry an identifier of the mobile phone. After receiving the verification response from the mobile phone, the server may send, to the vehicle-mounted terminal, the binding response that carries the identifier of the mobile phone, to facilitate subsequent direct communication between the vehicle-mounted terminal and the mobile phone.

When the server sends the verification request to the mobile phone based on the received user information, for example, if the received user information is a mobile phone number and/or an email address, the server may directly send the verification request to the mobile phone based on the mobile phone number or the email address. In another example, the server stores an association relationship between the user information of the mobile phone and the identifier of the mobile phone. After receiving the user information, the server sends the verification request to the mobile phone based on the association relationship between the user information of the mobile phone and the identifier of the mobile phone.

For example, the association relationship between the user information of the mobile phone and the identifier of the mobile phone may be established in the following manner: The mobile phone sends a user registration request to the server, where the user registration request carries the user information and the identifier of the mobile phone. After receiving the registration request from the mobile phone, the server stores the user information carried in the registration request. For example, the mobile phone may be installed with an application A that interacts with a vehicle. After the user purchases a vehicle, the user may register in a registration interface of the application A, and input the user information in the registration interface, where the user information includes a user name and a user password. In response to an operation of inputting registration information by the user, the mobile phone sends the user registration request to the server, where the user registration request carries the user information and the identifier of the mobile phone. When receiving the user registration request from the mobile phone, the server stores the user name, the user password, and the identifier of the mobile phone carried in the user registration request.

S403: The mobile phone sends an IP address of the mobile phone and the identifier of the mobile phone to the server

When registering with a network for the first time, the mobile phone may obtain, in the manner in which the vehicle-mounted terminal obtains the IP address allocated by the network side to the vehicle-mounted terminal in S301, the IP address allocated by the network side to the mobile phone. The identifier of the mobile phone may also use an IMSI, an IMEI, an MEID, or the like.

In a possible implementation, in the process of establishing the association with the vehicle-mounted terminal, the mobile phone may send the IP address of the mobile phone and the identifier of the mobile phone to the server. In another possible implementation, the mobile phone may alternatively send the IP address of the mobile phone and the identifier of the mobile phone to the server after establishing the association relationship with the vehicle-mounted terminal. This is not limited in this application. Details are not described herein again.

S404: The server determines, based on the identifier of the vehicle-mounted terminal and the identifier of the mobile phone, that there is the association between the vehicle-mounted terminal and the mobile phone.

After the server receives the identifier of the vehicle-mounted terminal and the IP address of the vehicle-mounted terminal that are sent by the vehicle-mounted terminal, the server determines, based on a first mapping relationship, that a terminal device associated with the vehicle-mounted terminal is the mobile phone. After the server receives the identifier of the mobile phone and the IP address of the mobile phone that are sent by the mobile phone, the server determines, based on the first mapping relationship, that a terminal device associated with the mobile phone is the vehicle-mounted terminal.

S405: The server sends the IP address of the mobile phone to the vehicle-mounted terminal.

S406: The server sends the IP address of the vehicle-mounted terminal to the mobile phone.

It should be noted that, in this embodiment of this application, a sequence of performing S405 and S406 is not limited, and the server may alternatively first perform S406 and then perform S405.

S407: The mobile phone and the vehicle-mounted terminal perform direct communication based on the IP address of the vehicle-mounted terminal and the IP address of the mobile phone.

For example, the mobile phone sends first information to the vehicle-mounted terminal based on the IP address of the vehicle-mounted terminal. For example, the first information is a control instruction. After detecting the control instruction input by the user, the mobile phone sends the control instruction to the vehicle-mounted terminal, where the control instruction carries the IP address of the vehicle-mounted terminal and the IP address of the mobile phone, the IP address of the vehicle-mounted terminal is used as a destination IP address, and the IP address of the mobile phone is used as a source IP address. For example, when the mobile phone detects a control instruction 1 that is input by the user and that indicates to turn on an air conditioner, the mobile phone uses an IPv6 address of the vehicle-mounted terminal as a destination IP address, uses an IPv6 address of the mobile phone as a source IP address, and sends the control instruction 1 to the vehicle-mounted terminal.

In a possible implementation, after the vehicle-mounted terminal receives the control instruction from the mobile phone, if a running state of the vehicle to which the vehicle-mounted terminal belongs represents that the vehicle is in a sleep mode, and in this case, the control instruction needs to wake up the vehicle, the vehicle-mounted terminal wakes up the vehicle, and performs an operation indicated by the control instruction after the vehicle is woken up. The sleep mode means that after an engine of the vehicle is shut off, a high voltage system is powered off, and the vehicle supplies power to a communication module of the vehicle-mounted terminal through a battery. For example, an air conditioner installed in the vehicle. In the sleep mode, a control unit of the air conditioner is turned off, and in this case, a target instruction cannot be executed. For example, after the vehicle-mounted terminal receives the control instruction 1 whose destination IP address is the IPv6 address of the vehicle-mounted terminal and source IP address is the IPv6 address of the mobile phone, if the vehicle to which the vehicle-mounted terminal belongs is in the sleep mode, the vehicle-mounted terminal wakes up the control unit of the air conditioner in the vehicle, and then performs an operation of turning on heating of the air conditioner.

In another possible implementation, before performing S407, that is, before the mobile phone sends the control instruction to the vehicle terminal, the mobile phone may alternatively send a wake-up instruction to the vehicle-mounted terminal. Further, the vehicle-mounted terminal receives the wake-up instruction from the terminal device, wakes up the vehicle, receives the control instruction from the mobile phone, and executes the operation indicated by the control instruction.

Further, the vehicle-mounted terminal may send a receiving response to the mobile phone after receiving the first information from the mobile phone. After the mobile phone sends the first information, if the mobile phone does not receive the receiving response from the vehicle-mounted terminal within second duration, in a possible implementation, the vehicle-mounted terminal may send the first information and the identifier of the vehicle-mounted terminal to the server. After receiving the first information from the mobile phone, the server sends the first information to the vehicle-mounted terminal based on the identifier of the vehicle-mounted terminal.

In another possible implementation, the mobile phone may alternatively send an address query request to the server, where the address query request carries the identifier of the vehicle-mounted terminal. The server queries the stored IP address of the vehicle-mounted terminal based on the identifier, of the vehicle-mounted terminal, that is carried in the address query request and the association relationship between the identifier of the mobile phone and the identifier of the vehicle-mounted terminal, and then sends the stored IP address of the vehicle-mounted terminal to the mobile phone. In an example, after obtaining the IP address, of the vehicle-mounted terminal, that is stored in the server, the mobile phone sends the first information to the vehicle-mounted terminal again based on the IP address, of the vehicle-mounted terminal, that is stored in the server. In another example, after obtaining the IP address, of the vehicle-mounted terminal, that is stored in the server, the mobile phone uses the IP address, of the vehicle-mounted terminal, that is stored in the server as the destination address when determining that the IP address, of the vehicle-mounted terminal, that is stored in the server is different from the IP address, of the vehicle-mounted terminal, that is stored in the mobile phone, and sends the first information to the vehicle-mounted terminal again.

In a process in which the vehicle-mounted terminal directly communicates with the mobile phone, the vehicle-mounted terminal may alternatively send second information to the mobile phone based on the IP address of the mobile phone. For example, the vehicle-mounted terminal may alternatively send, to the mobile phone, second information used to prompt the user that a power supply of the vehicle is abnormal. After receiving the second information, the mobile phone prompts the user to check battery usage of the vehicle.

In a process in which the vehicle-mounted terminal directly communicates with the mobile phone, both the IP address of the vehicle-mounted terminal and the IP address of the mobile phone may change. When the IP address of the vehicle-mounted terminal or the IP address of the mobile phone changes, the vehicle-mounted terminal or the mobile phone may notify a peer end of a new IP address.

The vehicle-mounted terminal is used as an example. The vehicle-mounted terminal may obtain the new IP address in but not limited to the following two possible implementations:

In a first possible implementation, the vehicle-mounted terminal may initiate network registration to the network side again in a case of restarting, turning off an airplane mode, moving from an area without network coverage to an area with network coverage, or the like, to obtain the new IP address allocated by the network side to the vehicle-mounted terminal, and the vehicle-mounted terminal uses the new IP address allocated by the network side as the IP address for direct communication with the mobile phone.

For example, the vehicle-mounted terminal may send a network registration request Attach Request to the network side again, where the network registration request carries an IPv6 address type parameter. The network side allocates a new IPv6 address to the vehicle-mounted terminal based on the IPv6 address type parameter, and sends, to the vehicle-mounted terminal, a registration response carrying the new IPv6 address of the vehicle-mounted terminal. After receiving the registration response from the network side, the vehicle-mounted terminal obtains the new IPv6 address.

In a second possible implementation, the vehicle-mounted terminal may periodically generate the new IP address. For example, after the vehicle-mounted terminal obtains the IP address allocated by the network side, when determining that use duration of the IP address of the vehicle-mounted terminal reaches first duration, the vehicle-mounted terminal generates the new IP address, where a network address of the new IP address is the same as a network address of an old IP address, and a host address of the new IP address is different from a host address of the old IP address. For example, after the vehicle-mounted terminal obtains a first IPv6 address allocated by the network side, when determining that use duration of the IP address of the vehicle-mounted terminal reaches seven days, the vehicle-mounted terminal periodically generates the new IPv6 address, where a network address of the new IPv6 address is the same as a network address of an old IPv6 address, and a host address of the new IPv6 address is different from a host address of the old IPv6 address. In this way, interaction security is improved by periodically changing the host address.

When the IP address of the vehicle-mounted terminal changes, the vehicle-mounted terminal may send the new IP address of the vehicle-mounted terminal to the mobile phone in the following two possible manners, so that the mobile phone may directly communicate with the vehicle-mounted terminal by using the new IP address of the vehicle-mounted terminal. In the following, an example in which the new IP address of the vehicle-mounted terminal is an address A and the old IP address of the vehicle-mounted terminal is an address B is used for description.

In a first possible manner, the vehicle-mounted terminal may send the address A to the mobile phone through the server. For example, the vehicle-mounted terminal may send the address A to the server. When receiving the address A from the vehicle-mounted terminal, the server replaces the stored IP address of the vehicle-mounted terminal with the address A. The server sends an address update indication to the mobile phone, where the address update indication carries the identifier of the vehicle-mounted terminal and the address A. After receiving the address update indication from the server, when determining, based on the identifier, of the vehicle-mounted terminal, that is carried in the address update indication, to replace the IP address of the vehicle-mounted terminal, the mobile phone replaces the stored IP address of the vehicle-mounted terminal from the address B with the address A.

In a second possible manner, the vehicle-mounted terminal may directly send the address A to the mobile phone. For example, the vehicle-mounted terminal may use the address A as a source IP address, and use the IP address of the mobile phone as a destination IP address, to send an address update indication to the mobile phone, where the address update indication carries the identifier of the vehicle-mounted terminal and the address A. In this way, after receiving the address update indication, when determining, based on the identifier, of the vehicle-mounted terminal, that is carried in the address update indication, to replace the IP address of the vehicle-mounted terminal, the mobile phone may replace the stored IP address of the vehicle-mounted terminal from the address B with the address A.

When the foregoing two possible manners are used, after replacing the IP address of the vehicle-mounted terminal from the address B with the address A, the mobile phone may use the address A as the destination IP address, and use the IP address of the mobile phone as the source IP address, to send an address update response to the vehicle-mounted terminal. After sending the address update indication to the mobile phone, if the vehicle-mounted terminal does not receive the address update response from the mobile phone within specified duration, the vehicle-mounted terminal may send the address A to the server. When receiving the address A from the vehicle-mounted terminal, the server replaces the stored IP address of the vehicle-mounted terminal from the address B with the address A.

The following describes the process in which the mobile phone notifies the vehicle-mounted terminal of a new IP address when the IP address of the mobile phone changes.

The mobile phone may alternatively obtain the new IP address in the foregoing two possible implementations. Details are not described herein. In the following, an example in which the new IP address of the mobile phone is an address C and an IP address of an old mobile phone is an address D is used for description.

Further, the mobile phone may notify the vehicle-mounted terminal of the new IP address in the following two possible manners:

In a first possible manner, when the IP address of the mobile phone changes, the mobile phone may send the address C to the vehicle-mounted terminal through the server, so that the vehicle-mounted terminal may directly communicate with the mobile phone by using the address C. For example, the mobile phone may send the address C to the server. When receiving the address C from the mobile phone, the server sends an address update indication to the vehicle-mounted terminal, where the address update indication carries the identifier of the mobile phone and the address C. The vehicle-mounted terminal stores the IP address of the mobile phone. After receiving the address update indication from the server, the vehicle-mounted terminal replaces the stored IP address of the mobile phone from the address D with the address C when determining, based on the identifier, of the mobile phone, that is carried in the address update indication, to replace the IP address of the mobile phone.

In a second possible manner, the mobile phone may directly send the address C to the vehicle-mounted terminal. For example, the mobile phone may use the address C as a source IP address, and use the IP address of the vehicle-mounted terminal as a destination IP address, to send an address update indication to the vehicle-mounted terminal, where the address update indication carries the identifier of the mobile phone and the address C. The vehicle-mounted terminal stores the IP address of the mobile phone. After receiving the address update indication from the mobile phone, the vehicle-mounted terminal may replace the stored IP address of the mobile phone from the address D with the address C when determining, based on the identifier, of the mobile phone, that is carried in the address update indication, to replace the IP address of the mobile phone.

When the foregoing two possible manners are used, after replacing the IP address of the mobile phone from the address D with the address C, the vehicle-mounted terminal may use the address C as the destination IP address, and use the IP address of the vehicle-mounted terminal as the source IP address, to send an address update response to the mobile phone. After sending the address update indication to the vehicle-mounted terminal, if the mobile phone does not receive the address update response from the vehicle-mounted terminal within specified duration, the mobile phone may send the address C to the server. When receiving the address C from the mobile phone, the server replaces the stored IP address of the mobile phone from the address D with the address C.

Further, when the vehicle-mounted terminal cannot directly communicate with the mobile phone based on the IP address of the mobile phone, the vehicle-mounted terminal may send an address query request to the server, where the address query request carries the identifier of the vehicle-mounted terminal. The server queries the stored IP address of the mobile phone based on the identifier, of the vehicle-mounted terminal, that is carried in the address query request and the association relationship between the identifier of the mobile phone and the identifier of the vehicle-mounted terminal, and then sends the stored IP address of the mobile phone to the vehicle-mounted terminal. After obtaining the IP address, of the mobile phone, that is stored in the server, the vehicle-mounted terminal directly communicates with the mobile phone based on the IP address, of the mobile phone, that is stored in the server

A first terminal device is a mobile phone, and a second terminal device associated with the mobile phone includes a smart air conditioner and a smart speaker. The following uses communication between the mobile phone and the smart air conditioner as an example, to describe a communication method provided in this application.

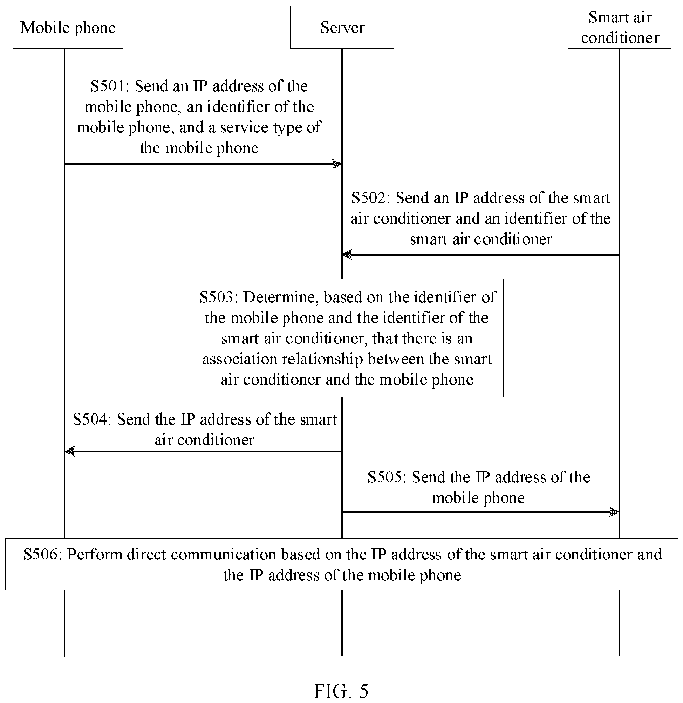

FIG. 5 is a schematic flowchart of possible communication according to an embodiment of this application.

S501: The mobile phone sends an IP address of the mobile phone, an identifier of the mobile phone, and a service type of the mobile phone to a server. The service type of the mobile phone is used to represent communication between the mobile phone and the smart air conditioner

After obtaining an IPv6 address, of the mobile phone, that is allocated by a network side, the mobile phone may send the IPv6 address of the mobile phone, the identifier of the mobile phone, and the service type of the mobile phone to the server.

S502: The smart air conditioner sends an IP address of the smart air conditioner and an identifier of the smart air conditioner to the server.

After obtaining an IPv6 address, of the smart air conditioner, that is allocated by the network side, the smart air conditioner sends the IPv6 address of the smart air conditioner and the identifier of the smart air conditioner to the server

It should be noted that an execution sequence between S501 and S502 is not limited during implementation of this application.

S503: The server determines, based on the identifier of the mobile phone and the identifier of the smart air conditioner, that there is an association relationship between the smart air conditioner and the mobile phone.

After receiving the IPv6 address of the mobile phone, the identifier of the mobile phone, and the service type of the mobile phone that are sent by the mobile phone, the server determines, based on a stored association relationship between the identifier of the smart air conditioner and the identifier of the mobile phone, that there is the association between the mobile phone and the smart air conditioner, and determines, based on a stored association relationship between an identifier of the smart speaker and the identifier of the mobile phone, that there is an association between the mobile phone and the smart speaker. The server determines, in the smart air conditioner and the smart speaker, that a service type of the smart air conditioner is the same as the service type of the mobile phone, and determines to send the IPv6 address of the mobile phone to the smart air conditioner

After receiving the IP address of the smart air conditioner and the identifier of the smart air conditioner sent by the smart air conditioner, the server determines that there is the association between the mobile phone and the smart air conditioner based on the association relationship between the identifier of the smart air conditioner and the identifier of the mobile phone, and sends the IPv6 address of the smart air conditioner to the mobile phone.

The association relationship between the identifier of the smart air conditioner and the identifier of the mobile phone may be determined in the following manner:

After purchasing the smart air conditioner, a user may select, from candidate devices provided by the server by using an application program, the smart air conditioner as a device that establishes an association with the mobile phone. The mobile phone reports the identifier of the mobile phone and the identifier of the smart air conditioner to the server in response to the user selection. After receiving the identifier of the mobile phone and the identifier of the smart air conditioner from the mobile phone, the server establishes and stores the association relationship between the identifier of the smart air conditioner and the identifier of the mobile phone.

S504: The server sends the IP address of the smart air conditioner to the mobile phone.

S505: The server sends the IP address of the mobile phone to the smart air conditioner

It should be noted that an execution sequence between S504 and S505 is not limited during implementation of this application.

S506: The smart air conditioner and the mobile phone perform communication based on the IP address of the mobile phone and the IP address of the smart air conditioner

The smart air conditioner obtains the IPv6 address of the mobile phone. After the mobile phone obtains the IPv6 address of the smart air conditioner, the smart air conditioner and the mobile phone may directly communicate with each other by using the IPv6 address of the mobile phone and the IPv6 address of the smart air conditioner For example, the smart air conditioner may send prompt information to the mobile phone, where the prompt information is used to prompt the user that a room temperature is lower than a set temperature, the prompt information carries the IPv6 address of the mobile phone and the IPv6 address of the smart air conditioner, the IPv6 address of the mobile phone is used as a destination IP address, and the IPv6 address of the smart air conditioner is used as a source IP address. After receiving the prompt information, the mobile phone prompts the user that the room temperature is too low. For another example, the mobile phone sends a control instruction to the smart air conditioner, where the control instruction is used to indicate the smart air conditioner to power off, the control instruction carries the IPv6 address of the mobile phone and the IPv6 address of the smart air conditioner, the IPv6 address of the smart air conditioner is used as a destination IP address, and the IPv6 address of the mobile phone is used as a source IP address. After receiving the control instruction from the mobile phone, the smart air conditioner powers off the air conditioner

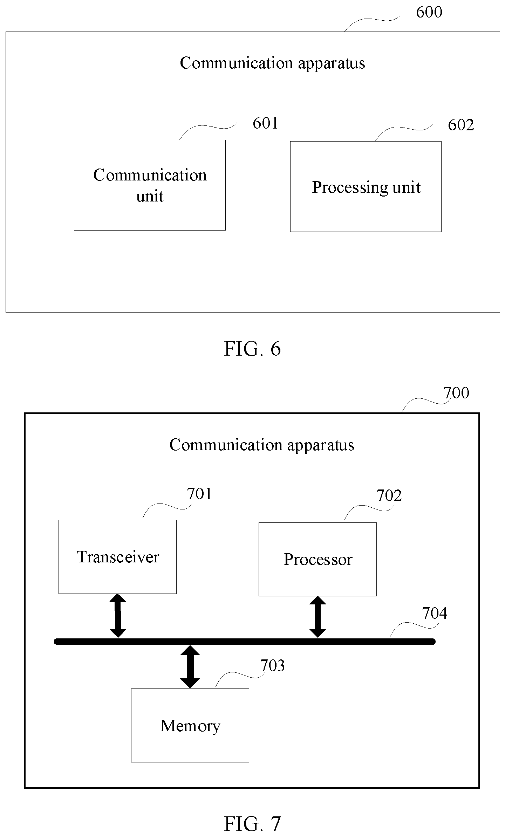

Based on a same technical concept, this application further provides a communication apparatus. A structure of the apparatus is shown in FIG. 6, and includes a communication unit 601 and a processing unit 602. The communication apparatus 600 may be used in the first terminal device, the second terminal device, or the server in the communication method shown in FIG. 3. The following describes functions of the units in the communication apparatus 600. The communication unit 601 is configured to receive and send data. When the communication apparatus 600 is used in the first terminal device, the second terminal device, or the server, the communication unit 601 may also be referred to as a physical interface, a communication module, a communication interface, or an input/output interface. A vehicle-mounted device or a reader/writer may be connected to a network cable or a cable through the communication unit, to establish a physical connection to another device.

The following describes functions of the communication unit 601 and the processing unit 602 when the communication apparatus 600 is used in the first terminal device.

The communication apparatus 600 includes the communication unit 601. The communication unit 601 is configured to: obtain a first IP address allocated by a network device to the first terminal device, where the first IP address is used to directly communicate with a second terminal device associated with the first terminal device; send the first IP address and a first identifier of the first terminal device to the server, so that the server sends the first IP address to the second terminal device, where there is an association relationship between the first identifier and a second identifier of the second terminal device; and receive first information from the second terminal device, where the first information carries the first IP address, and the first IP address is used as a destination IP address.

In a possible design, the first IP address is an IPv6 address.

In a possible design, when obtaining the first IP address allocated by the network device to the first terminal device, the communication unit 601 is configured to: send a network registration request to the network device, where the network registration request carries an address type parameter, and the address type parameter is used to indicate the network device to allocate the IPv6 address to the first terminal device; and obtain a network registration response returned by the network device, where the network registration response carries the first IP address.

In a possible design, the communication unit 601 is further configured to: in a process in which the first terminal device reattaches to a network, obtain a third IP address allocated by the network device to the first terminal device, where the third IP address is different from the first IP address; and notify the second terminal device of the third IP address, where the third IP address is used to indicate the second terminal device to replace the stored first IP address of the first terminal device with the third IP address.

In a possible design, the communication apparatus 600 includes the processing unit 602. The processing unit 602 is configured to: when determining that use duration of the first IP address reaches preset duration, update, to a third IP address, the first IP address used by the first terminal device to directly communicate with the second terminal device, where a host address of the third IP address is different from a host address of the first IP address, and a network address of the third IP address is the same as a network address of the first IP address. The communication unit 601 is further configured to notify the second terminal device of the third IP address, where the third IP address is used to indicate the second terminal device to replace the stored first IP address of the first terminal device with the third IP address.

In a possible design, when notifying the second terminal device of the third IP address, the communication unit 601 is configured to: notify the second terminal device of the third IP address through the server; or notify the second terminal device of the third IP address based on a second IP address.

In a possible design, the first terminal device is associated with N second terminal devices; and when sending the first IP address and the first identifier of the first terminal device to the server, the communication unit 601 is configured to: directly send the first IP address and the first identifier of the first terminal device to the server; send the first IP address, the first identifier, and a first service type of the first terminal device to the server; or send the first IP address, the first identifier, and a second identifier of at least one second terminal device to the server.

The following describes functions of the communication unit 601 and the processing unit 602 when the communication apparatus 600 is used in the server.

The communication apparatus 600 includes the communication unit 601. The communication unit 601 is configured to: receive a first identifier of a first terminal device and a first IP address of the first terminal device from the first terminal device, where the first IP address is used to directly communicate with a second terminal device associated with the first terminal device; and notify the second terminal device of the first IP address, where there is an association relationship between the first identifier and a second identifier of the second terminal device.

In a possible design, the communication apparatus 600 further includes the processing unit 602. The processing unit 602 is configured to determine, based on a first mapping relationship, N second terminal devices associated with the first terminal device, where the first mapping relationship includes an association relationship between the first identifier and N second identifiers, and the N second identifiers are respectively used to identify the N second terminal devices. When notifying the second terminal device of the first IP address, the communication unit 601 is configured to notify the N second terminal devices of the first IP address.

In a possible design, the first terminal device is associated with N second terminal devices; and when receiving the first identifier of the first terminal device and the first IP address of the first terminal device from the first terminal device, the communication unit 601 is further configured to receive a first service type of the first terminal device from the first terminal device. The communication apparatus 600 further includes the processing unit 602. The processing unit 602 is configured to determine, based on a first mapping relationship, the N second terminal devices associated with the first terminal device, where the first mapping relationship includes an association relationship between the first identifier and N second identifiers, and the N second identifiers are respectively used to identify the N second terminal devices; and screen at least one second terminal device from the N second terminal devices based on a second mapping relationship, where the second mapping relationship includes an association relationship between a second identifier of the at least one second terminal device and a second service type of the at least one second terminal device, and the second service type of the at least one second terminal device is the same as the first service type. When notifying the second terminal device of the first IP address, the communication unit 601 is configured to notify the at least one second terminal device of the first IP address.

In a possible design, the first terminal device is associated with N second terminal devices; and when receiving the first identifier of the first terminal device and the first IP address of the first terminal device from the first terminal device, the communication unit 601 is further configured to receive a first service type of the first terminal device from the first terminal device. When notifying the second terminal device of the first IP address, the communication unit is configured to notify at least one second terminal device of the first IP address.

Based on a same technical concept, this application further provides a communication apparatus. The communication apparatus 700 may implement functions of the first terminal device, the second terminal device, or the server in the communication method shown in FIG. 3. Refer to FIG. 7. The communication apparatus 700 includes a transceiver 701, a processor 702, and a memory 703. The transceiver 701, the processor 702, and the memory 703 are connected to each other.

Optionally, the transceiver 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 7. However, this does not indicate that there is only one bus or only one type of bus.

The transceiver 701 is configured to receive and send data, to implement communication interaction with another device.

In a possible application scenario, when the communication apparatus 700 is used in the first terminal device, the processor 702 is configured to: when determining that use duration of a first IP address reaches preset duration, update the first IP address to a third IP address, where a host address of the third IP address is different from a host address of the first IP address, and a network address of the third IP address is the same as a network address of the first IP address.

In another possible application scenario, when the communication apparatus 700 is used in the server, in a possible design, the processor 702 is configured to determine, based on a first mapping relationship, N second terminal devices associated with the first terminal device, where the first mapping relationship includes an association relationship between a first identifier and N second identifiers, and the N second identifiers are respectively used to identify the N second terminal devices.

In a possible design, the processor 702 is configured to determine, based on a first mapping relationship, N second terminal devices associated with the first terminal device, where the first mapping relationship includes an association relationship between the first identifier and N second identifiers, and the N second identifiers are respectively used to identify the N second terminal devices; and screen at least one second terminal device from the N second terminal devices based on a second mapping relationship, where the second mapping relationship includes an association relationship between a second identifier of the at least one second terminal device and a second service type of the at least one second terminal device, and the second service type of the at least one second terminal device is the same as the first service type.

It may be understood that the memory in FIG. 7 in this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the system and method described in this specification includes but is not limited to these memories and any memory of another proper type.

Based on the foregoing embodiments, an embodiment of this application further provides a computer program. When the computer program is run on a computer, the computer is enabled to perform the communication methods provided in the embodiments shown in FIG. 3, FIG. 4, and FIG. 5.

Based on the foregoing embodiments, an embodiment of this application further provides a computer-readable storage medium. The computer-readable storage medium stores a computer program. When the computer program is executed by a computer, the computer is enabled to perform the communication methods provided in the embodiments shown in FIG. 3, FIG. 4, and FIG. 5. The storage medium may be any available medium that can be accessed by the computer. The following provides an example but does not impose a limitation: The computer-readable medium may include a RAM, a ROM, an EEPROM, a CD-ROM or another optical disc storage, a magnetic disk storage medium or another magnetic storage device, or any other medium that can be for carrying or storing expected program code in a form of instructions or a data structure and can be accessed by the computer.

Based on the foregoing embodiments, an embodiment of this application further provides a chip. The chip is configured to read a computer program stored in a memory, to implement the communication methods provided in the embodiments shown in FIG. 3, FIG. 4, and FIG. 5.

Based on the foregoing embodiments, an embodiment of this application further provides a chip system. The chip system includes a processor, configured to support a computer apparatus in implementing functions of the first terminal device, the second terminal device, or the server in the embodiments shown in FIG. 3, FIG. 4, and FIG. 5. In a possible design, the chip system further includes a memory. The memory is configured to store a program and data that are used for the computer apparatus. The chip system may include a chip, or may include the chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope of protection defined by the claims of this application and their equivalent technologies.

## Claims

1. A communication system, comprising a server, a first terminal device, and a second terminal device, wherein
the first terminal device is configured to: obtain a first internet protocol IP address allocated by a network device to the first terminal device, and send the first IP address and a first identifier of the first terminal device to the server, wherein the first IP address is used to directly communicate with the second terminal device associated with the first terminal device;
the server is configured to: receive the first identifier and the first IP address from the first terminal device; and notify the second terminal device of the first IP address based on the first identifier, wherein there is an association relationship between the first identifier and a second identifier of the second terminal device;
the second terminal device is configured to: receive and store the first IP address from the server; and send first information to the first terminal device based on the first IP address; and
the first terminal device is further configured to receive the first information from the second terminal device.

2. The system according to claim 1, wherein the first IP address is an internet protocol version 6 IPv6 address.

3. The system according to claim 2, wherein when obtaining the first IP address allocated by the network device to the first terminal device, the first terminal device is configured to:
send a network registration request to the network device, wherein the network registration request carries an address type parameter, and the address type parameter is used to indicate the network device to allocate the IPv6 address to the first terminal device; and
obtain a network registration response returned by the network device, wherein the network registration response carries the first IP address.

4. The system according to any one of claims 1 to 3, wherein the first terminal device is further configured to:
in a process in which the first terminal device reattaches to a network, obtain a third IP address allocated by the network device to the first terminal device, wherein the third IP address is different from the first IP address; and
notify the second terminal device of the third IP address; and
the second terminal device is further configured to: receive the third IP address from the first terminal device, and replace the stored first IP address with the third IP address.

5. The system according to any one of claims 1 to 3, wherein the first terminal device is further configured to:
when determining that use duration of the first IP address reaches first duration, update the first IP address to a third IP address, wherein a host address of the third IP address is different from a host address of the first IP address, and the host address of the third IP address is the same as a network address of the first IP address; and
notify the second terminal device of the third IP address; and
the second terminal device is further configured to: receive the third IP address, and replace the stored first IP address with the third IP address.

6. The system according to claim 4 or 5, wherein when notifying the second terminal device of the third IP address, the first terminal device is configured to:
send the third IP address to the server;
the server is further configured to: receive the third IP address from the first terminal device, and send the third IP address to the second terminal device; and
when receiving the third IP address, the second terminal device is configured to: receive the third IP address sent by the server

7. The system according to claim 4 or 5, wherein when notifying the second terminal device of the third IP address, the first terminal device is configured to:
directly send the third IP address to the second terminal device based on a stored second IP address of the second terminal device; and
when receiving the third IP address, the second terminal device is configured to: receive the third IP address sent by the first terminal device.

8. The system according to any one of claims 1 to 7, wherein the first terminal device is further configured to send a receiving response to the second terminal device after receiving the first information from the second terminal device;
the second terminal device is further configured to: if no receiving response from the first terminal device is received within second duration, send an address query request to the server, wherein the address query request carries the first identifier;
the server is further configured to: receive the address query request from the second terminal device; query, based on the address query request, a fourth IP address of the first terminal device identified by the first identifier; and send the fourth IP address to the second terminal device; and
the second terminal device is further configured to: receive the fourth IP address from the server, and send the first information to the first terminal device again based on the fourth IP address.

9. The system according to any one of claims 1 to 7, wherein the first terminal device is associated with N second terminal devices; and when notifying the second terminal device of the first IP address based on the first identifier, the server is configured to:
determine, based on a first mapping relationship, the N second terminal devices associated with the first terminal device, wherein the first mapping relationship comprises an association relationship between the first identifier and N second identifiers, and the N second identifiers are respectively used to identify the N second terminal devices; and
notify the N second terminal devices of the first IP address.

10. The system according to any one of claims 1 to 7, wherein the first terminal device is associated with N second terminal devices; and when sending the first IP address and the first identifier of the first terminal device to the server, the first terminal device is configured to:
send the first IP address, the first identifier of the first terminal device, and a first service type of the first terminal device to the server;
the server is further configured to receive the first service type from the first terminal device; and
when notifying the second terminal device of the first IP address based on the first identifier, the server is configured to:
determine, based on the first identifier and the first service type, at least one second terminal device associated with a service, of the first service type, that is performed by the first terminal device; and
notify the at least one second terminal device of the first IP address.

11. The system according to any one of claims 1 to 7, wherein the first terminal device is associated with N second terminal devices; and when sending the first IP address and the first identifier of the first terminal device to the server, the first terminal device is configured to:
send the first IP address, the first identifier of the first terminal device, and at least one target device identifier to the server, wherein the at least one target device identifier is used to identify at least one target device, and the at least one target device identifier comprises the second identifier;
the server is further configured to receive the at least one target device identifier from the first terminal device; and
when notifying the second terminal device of the first IP address based on the first identifier, the server is configured to:
notify the second terminal device of the first IP address based on the first identifier and the at least one target device identifier.

12. A communication method, applied to a first terminal device, wherein the method comprises:
obtaining a first IP address allocated by a network device to the first terminal device, wherein the first IP address is used to directly communicate with a second terminal device associated with the first terminal device;
sending the first IP address and a first identifier of the first terminal device to a server, so that the server sends the first IP address to the second terminal device, wherein there is an association relationship between the first identifier and a second identifier of the second terminal device; and
receiving first information from the second terminal device, wherein the first information carries the first IP address, and the first IP address is used as a destination IP address.

13. The method according to claim 12, wherein the first IP address is an IPv6 address.

14. The method according to claim 13, wherein the obtaining a first IP address allocated by a network device to the first terminal device comprises:
sending a network registration request to the network device, wherein the network registration request carries an address type parameter, and the address type parameter is used to indicate the network device to allocate the IPv6 address to the first terminal device; and
obtaining a network registration response returned by the network device, wherein the network registration response carries the first IP address.

15. The method according to any one of claims 12 to 14, further comprising:
in a process in which the first terminal device reattaches to a network, obtaining a third IP address allocated by the network device to the first terminal device, wherein the third IP address is different from the first IP address; and
notifying the second terminal device of the third IP address, wherein the third IP address is used to indicate the second terminal device to replace the stored first IP address of the first terminal device with the third IP address.

16. The method according to any one of claims 12 to 14, further comprising:
when determining that use duration of the first IP address reaches preset duration, updating the first IP address to a third IP address, wherein a host address of the third IP address is different from a host address of the first IP address, and a network address of the third IP address is the same as a network address of the first IP address; and
notifying the second terminal device of the third IP address, wherein the third IP address is used to indicate the second terminal device to replace the stored first IP address of the first terminal device with the third IP address.

17. The method according to claim 15 or 16, wherein the notifying the second terminal device of the third IP address comprises:
notifying the second terminal device of the third IP address through the server; or
directly sending the third IP address to the second terminal device based on a stored second IP address of the second terminal device.

18. The method according to any one of claims 12 to 17, wherein the first terminal device is associated with N second terminal devices, and the sending the first IP address and a first identifier of the first terminal device to a server comprises:
directly sending the first IP address and the first identifier of the first terminal device to the server;
sending the first IP address, the first identifier, and a first service type of the first terminal device to the server; or
sending the first IP address, the first identifier of the first terminal device, and at least one target device identifier to the server, wherein the at least one target device identifier is used to identify at least one target device, and the at least one target device identifier comprises the second identifier.

19. A communication method, applied to a server, wherein the method comprises:
receiving a first identifier of a first terminal device and a first IP address of the first terminal device from the first terminal device, wherein the first IP address is used by the first terminal device to directly communicate with a second terminal device associated with the first terminal device; and
notifying the second terminal device of the first IP address based on the first identifier, wherein there is an association relationship between the first identifier and a second identifier of the second terminal device.

20. The method according to claim 19, wherein the first terminal device is associated with N second terminal devices, and the notifying the second terminal device of the first IP address based on the first identifier comprises:
determining, based on a first mapping relationship, the N second terminal devices associated with the first terminal device, wherein the first mapping relationship comprises an association relationship between the first identifier and N second identifiers, and the N second identifiers are respectively used to identify the N second terminal devices; and
notifying the N second terminal devices of the first IP address.

21. The method according to claim 19, wherein the first terminal device is associated with N second terminal devices; and when receiving the first identifier of the first terminal device and the first IP address of the first terminal device from the first terminal device, the server further receives a first service type of the first terminal device from the first terminal device; and
the notifying the second terminal device of the first IP address based on the first identifier comprises:
determining, based on the first identifier and the first service type, at least one second terminal device associated with a service, of the first service type, that is performed by the first terminal device; and
notifying the at least one second terminal device of the first IP address.

22. The method according to claim 19, wherein the first terminal device is associated with N second terminal devices; and when receiving the first identifier of the first terminal device and the first IP address of the first terminal device from the first terminal device, the server further receives at least one target device identifier from the first terminal device, wherein the at least one target device identifier is used to identify at least one target device, and the at least one target device identifier comprises the second identifier; and
the notifying the second terminal device of the first IP address based on the first identifier comprises:
notifying the second terminal device of the first IP address based on the first identifier and the at least one target device identifier.

23. A communication apparatus, comprising a sending unit and a receiving unit, wherein
the receiving unit is configured to:
obtain a first IP address allocated by a network device to the communication apparatus, wherein the first IP address is used to directly communicate with a second terminal device associated with the communication apparatus;
the sending unit is configured to:
send the first IP address and a first identifier of the communication apparatus to a server, so that the server sends the first IP address to the second terminal device, wherein there is an association relationship between the first identifier and a second identifier of the second terminal device; and
the receiving unit is further configured to receive first information from the second terminal device, wherein the first information carries the first IP address, and the first IP address is used as a destination IP address.

24. The apparatus according to claim 23, wherein the first IP address is an IPv6 address.

25. The apparatus according to claim 24, wherein the sending unit is further configured to:
send a network registration request to the network device, wherein the network registration request carries an address type parameter, and the address type parameter is used to indicate the network device to allocate the IPv6 address to the communication apparatus; and
that the receiving unit obtains a first IP address allocated by a network device to the communication apparatus comprises:
obtaining a network registration response returned by the network device, wherein the network registration response carries the first IP address.

26. The apparatus according to any one of claims 23 to 25, wherein the receiving unit is further configured to:
in a process in which the communication apparatus reattaches to a network, obtain a third IP address allocated by the network device to the communication apparatus, wherein the third IP address is different from the first IP address; and
the sending unit is further configured to notify the second terminal device of the third IP address, wherein the third IP address is used to indicate the second terminal device to replace the stored first IP address of the communication apparatus with the third IP address.

27. The apparatus according to any one of claims 23 to 25, wherein the apparatus further comprises a processing unit, and the processing unit is configured to:
when determining that use duration of the first IP address reaches preset duration, update the first IP address to a third IP address, wherein a host address of the third IP address is different from a host address of the first IP address, and a network address of the third IP address is the same as a network address of the first IP address; and
the sending unit is further configured to notify the second terminal device of the third IP address, wherein the third IP address is used to indicate the second terminal device to replace the stored first IP address of the communication apparatus with the third IP address.

28. The apparatus according to claim 26 or 27, wherein when notifying the second terminal device of the third IP address, the sending unit is configured to:
notify the second terminal device of the third IP address through the server; or
directly send the third IP address to the second terminal device based on a stored second IP address of the second terminal device.

29. The apparatus according to any one of claims 23 to 28, wherein the communication apparatus is associated with N second terminal devices; and when sending the first IP address and the first identifier of the communication apparatus to the server, the sending unit is configured to:
directly send the first IP address and the first identifier of the communication apparatus to the server;
send the first IP address, the first identifier, and a first service type of the communication apparatus to the server; or
send the first IP address, the first identifier, and a second identifier of at least one second terminal device to the server

30. A server, comprising a sending unit and a receiving unit, wherein
the receiving unit is configured to:
receive a first identifier of a first terminal device and a first IP address of the first terminal device from the first terminal device, wherein the first IP address is used by the first terminal device to directly communicate with a second terminal device associated with the first terminal device; and
the sending unit is configured to:
notify the second terminal device of the first IP address, wherein there is an association relationship between the first identifier and a second identifier of the second terminal device.

31. The server according to claim 30, wherein the first terminal device is associated with N second terminal devices, the server further comprises a processing unit, and the processing unit is configured to:
determine, based on a first mapping relationship, the N second terminal devices associated with the first terminal device, wherein the first mapping relationship comprises an association relationship between the first identifier and N second identifiers, and the N second identifiers are respectively used to identify the N second terminal devices; and
when notifying the second terminal device of the first IP address, the sending unit is configured to: notify the N second terminal devices of the first IP address.

32. The server according to claim 30, wherein the first terminal device is associated with N second terminal devices; and when receiving the first identifier of the first terminal device and the first IP address of the first terminal device from the first terminal device, the receiving unit is further configured to:
receive a first service type of the first terminal device from the first terminal device;
the apparatus further comprises a processing unit, and the processing unit is configured to:
determine, based on the first identifier and the first service type, at least one second terminal device associated with a service, of the first service type, that is performed by the first terminal device; and
when notifying the second terminal device of the first IP address, the sending unit is configured to:
notify the at least one second terminal device of the first IP address.

33. The server according to claim 30, wherein the first terminal device is associated with N second terminal devices; and when receiving the first identifier of the first terminal device and the first IP address of the first terminal device from the first terminal device, the receiving unit is further configured to:
receive a first service type of the first terminal device from the first terminal device; and
when notifying the second terminal device of the first IP address, the sending unit is configured to: notify at least one second terminal device of the first IP address.

34. A communication apparatus, comprising a memory and one or more processors, wherein the memory is configured to store computer program code, and the computer program code comprises computer instructions; and when the computer instructions are executed by the processor, the communication apparatus is enabled to perform the method according to any one of claims 12 to 18, or perform the method according to any one of claims 19 to 22.

35. A computer-readable storage medium, comprising computer instructions, wherein when the computer instructions are run on a communication apparatus, the communication apparatus is enabled to perform the method according to any one of claims 12 to 18, or perform the method according to any one of claims 19 to 22.

36. A computer program product, wherein when the computer program product runs on a processor, the processor is enabled to perform the method according to any one of claims 12 to 18, or perform the method according to any one of claims 19 to 22.
